(19) Europäisches Patentamt
European Patent Office
Office européen des brevets

(11) EP 4 568 206 A1

(12) **EUROPEAN PATENT APPLICATION**

(43) Date of publication:
**11.06.2025 Bulletin 2025/24**

(21) Application number: **23214660.5**

(22) Date of filing: **06.12.2023**

(51) International Patent Classification (IPC):
**H04L 27/26** (2006.01)    **G06N 3/08** (2023.01)

(52) Cooperative Patent Classification (CPC):
**H04L 27/2624; G06N 3/045; G06N 3/08**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Nokia Solutions and Networks Oy
02610 Espoo (FI)**

(72) Inventors:
- **GOKCELI, Selahattin**
  **Helsinki (FI)**
- **KORPI, Dani Johannes**
  **Tampere (FI)**
- **UPADHYA, Karthik**
  **Espoo (FI)**

(74) Representative: **Nokia EPO representatives
Nokia Technologies Oy
Karakaari 7
02610 Espoo (FI)**

(54) **MACHINE LEARNING -BASED REDUCTION OF PEAK-TO-AVERAGE-POWER RATIO OF TIME-DOMAIN RADIO SIGNALS, AND RELATED DEVICES, METHODS AND COMPUTER PROGRAMS**

(57)    Devices, methods and computer programs for machine learning (ML) -based reduction of peak-to-average-power ratio (PAPR) of time-domain radio signals are disclosed. At least some example embodiments may allow reducing the PAPR of time-domain radio signals of high-frequency communications in an efficient way to achieve improvements in energy efficiency, while also minimizing computational complexity of the PAPR reduction with the ML-based techniques. Machine Learning based clipping and filtering scheme for PAPR reduction: In order to avoid peak regrowth due to the frequency domain filtering of the clipping noise, a ML-based clipping (see figure 4) is performed (only one iteration needed): The loss function used for training the ML clipping using random signal has three different loss terms: The first term is a binary cross-entropy between transmitted and received bits, the second corresponds to the PAPR level while the third term is an EVM term. The clipping is only performed for OFDM samples having an amplitude over a threshold, and polynomial curve fitting is performed for the peak cancellation (figure 3).

Bits → Modulation (410) → Symbols → IDFT (420) → ML clipper (430) → DFT (440) → Filtering (450) → ⊕ → IDFT (460) → CP addition (470) → PA (480)

400

**FIG. 4**

EP 4 568 206 A1

**Description**

**TECHNICAL FIELD**

The disclosure relates generally to communications and, more particularly but not exclusively, to machine learning - based reduction of peak-to-average-power ratio of time-domain radio signals, as well as related devices, methods and computer programs.

**BACKGROUND**

Energy efficiency and spectral efficiency are considered to be important for next-generation wireless networks due to increasing demand and emerging challenges. High carrier frequencies have great potential to meet the performance goals, as these are currently not utilized and can offer high capacity and data rate. Accordingly, carrier frequencies up to 52.6 GHz are supported by existing 3GPP standardization (e.g., fifth-generation new radio (5G NR) Rel-15). Furthermore, frequencies above this level are being studied as well, and it is expected that these will be a part of future sixth-generation (6G) wireless networks specifications.

Some challenges posed by such high frequencies may include a higher path loss, as well as hardware problems due to radio frequency (RF) components, such as power amplifiers (PAs). Thus, a higher PA efficiency and transmission power may be important for a good performance, at least in some situations.

Accordingly, at least in some situations, there may be a need for reducing peak-to-average-power ratio (PAPR) of time-domain radio signals of such high-frequency communications in an efficient way to achieve improvements in energy efficiency.

**BRIEF SUMMARY**

The scope of protection sought for various example embodiments of the invention is set out by the independent claims. The example embodiments and features, if any, described in this specification that do not fall under the scope of the independent claims are to be interpreted as examples useful for understanding various example embodiments of the invention.

An example embodiment of an apparatus comprises at least one processor, and at least one memory storing instructions that, when executed by the at least one processor, cause the apparatus at least to obtain a time-domain signal corresponding to an orthogonal frequency division multiplexing, OFDM, modulated radio transmission bit stream. The instructions, when executed by the at least one processor, further cause the apparatus at least to clip the obtained time-domain signal to maintain a peak-to-average-power ratio, PAPR, of the obtained time-domain signal at or below a target level. The clipping of the obtained time-domain signal to maintain the PAPR at or below the target level comprises applying a clipping response at least to a part of the obtained time-domain signal. The clipping response represents a relationship between original amplitude values of time-domain OFDM signals and corresponding clipped amplitude values, and the clipping response has been generated with a machine learning, ML, model configured to generate a clipping response that reduces time-domain signal peaks while simultaneously suppressing regrowth of the time-domain signal peaks.

In an example embodiment, alternatively or in addition to the above-described example embodiments, the instructions, when executed by the at least one processor, further cause the apparatus to apply noise filtering to the clipped time-domain signal in frequency domain to filter noise caused by the clipping of the obtained time-domain signal.

In an example embodiment, alternatively or in addition to the above-described example embodiments, the instructions, when executed by the at least one processor, further cause the apparatus to access a lookup table comprising original and corresponding clipped amplitude values representing the generated clipping response, to perform the clipping of the obtained time-domain signal.

In an example embodiment, alternatively or in addition to the above-described example embodiments, the instructions, when executed by the at least one processor, further cause the apparatus to access a polynomial fit modelling the generated clipping response, to perform the clipping of the obtained time-domain signal.

In an example embodiment, alternatively or in addition to the above-described example embodiments, the instructions, when executed by the at least one processor, further cause the apparatus to apply the generated clipping response only to original amplitude values of the obtained time-domain signal that exceed a minimum amplitude threshold corresponding to a minimum PAPR.

In an example embodiment, alternatively or in addition to the above-described example embodiments, the ML model comprises a convolutional neural network, CNN.

In an example embodiment, alternatively or in addition to the above-described example embodiments, the instructions, when executed by the at least one processor, further cause the apparatus to participate in end-to-end training of the ML model with receiver processing, via applying a loss function.

In an example embodiment, alternatively or in addition to the above-described example embodiments, loss terms of the applied cross-entropy loss function comprise at least one of: the PAPR, a bit error rate, BER, an error vector magnitude, EVM, or an adjacent channel leakage ratio, ACLR.

An example embodiment of a method comprises obtaining, by an apparatus, a time-domain signal corresponding to an orthogonal frequency division multiplexing, OFDM, modulated radio transmission bit stream. The method further comprises clipping, by the apparatus, the obtained time-domain signal to maintain a peak-to-average-power ratio, PAPR, of the obtained time-domain signal at or below a target level. The clipping of the obtained time-domain signal to maintain the PAPR at or below the target level comprises applying a clipping response at least to a part of the obtained time-domain signal. The clipping response represents a relationship between original amplitude values of time-domain OFDM signals and corresponding clipped amplitude values, and the clipping response has been generated with a machine learning, ML, model configured to generate a clipping response that reduces time-domain signal peaks while simultaneously suppressing regrowth of the time-domain signal peaks.

An example embodiment of an apparatus comprises means for carrying out a method according to any of the above-described example embodiments.

An example embodiment of a computer program comprises instructions for causing an apparatus to perform at least the following: obtain a time-domain signal corresponding to an orthogonal frequency division multiplexing, OFDM, modulated radio transmission bit stream; and clip the obtained time-domain signal to maintain a peak-to-average-power ratio, PAPR, of the obtained time-domain signal at or below a target level. The clipping of the obtained time-domain signal to maintain the PAPR at or below the target level comprises applying a clipping response at least to a part of the obtained time-domain signal. The clipping response represents a relationship between original amplitude values of time-domain OFDM signals and corresponding clipped amplitude values, and the clipping response has been generated with a machine learning, ML, model configured to generate a clipping response that reduces time-domain signal peaks while simultaneously suppressing regrowth of the time-domain signal peaks.

An example embodiment of a radio transceiver device comprises the apparatus according to any of the above-described example embodiments.

An example embodiment of a network node comprises the radio transceiver device according to any of the above-described example embodiments.

## DESCRIPTION OF THE DRAWINGS

The accompanying drawings, which are included to provide a further understanding of the embodiments and constitute a part of this specification, illustrate embodiments and together with the description help to explain the principles of the embodiments. In the drawings:

**FIG. 1** shows an example embodiment of the subject matter described herein illustrating an example system, where various embodiments of the present disclosure may be implemented;

**FIG. 2** shows an example embodiment of the subject matter described herein illustrating an apparatus;

**FIG. 3** shows an example embodiment of the subject matter described herein illustrating an example of a clipping response;

**FIG. 4** shows an example embodiment of the subject matter described herein illustrating a disclosed example architecture for processing a radio transmission bit stream for transmission;

**FIG. 5** shows an example embodiment of the subject matter described herein illustrating disclosed end-to-end training; and

**FIG. 6** shows an example embodiment of the subject matter described herein illustrating a disclosed method for the apparatus of Fig. 2.

Like reference numerals are used to designate like parts in the accompanying drawings.

## DETAILED DESCRIPTION

Reference will now be made in detail to embodiments, examples of which are illustrated in the accompanying drawings. The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

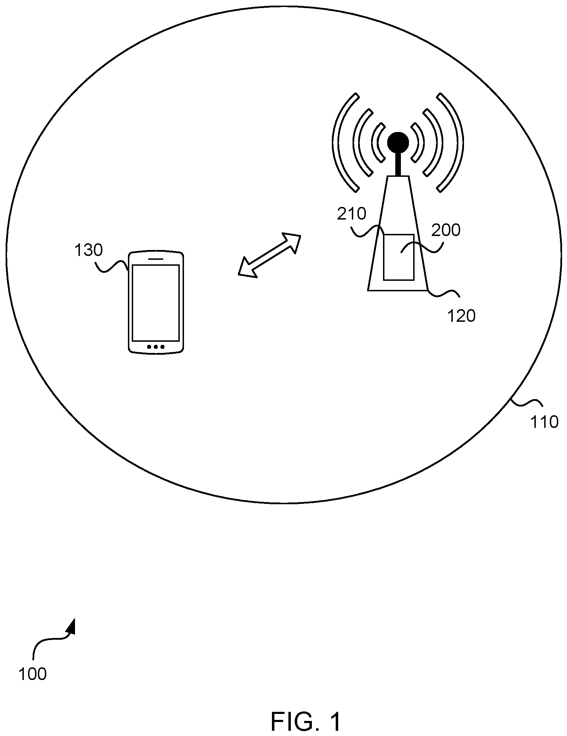

Fig. 1 illustrates example system 100, where various embodiments of the present disclosure may be implemented. The system 100 may comprise a fifth generation (5G) new radio (NR) network or a network beyond 5G wireless networks, 110. An example representation of system 100 is shown depicting network node 120 and user device 130. At least in some embodiments, network 110 may comprise one or more massive machine-to-machine (M2M) network(s), massive machine type communications (mMTC) network(s), internet of things (IoT) network(s), industrial internet-of-things (IIoT) network(s), enhanced mobile broadband (eMBB) network(s), ultra-reliable low-latency communication (URLLC) network(s), and/or the like. In other words, network 110 may be configured to serve diverse service types and/or use cases, and it may logically be seen as comprising one or more networks.

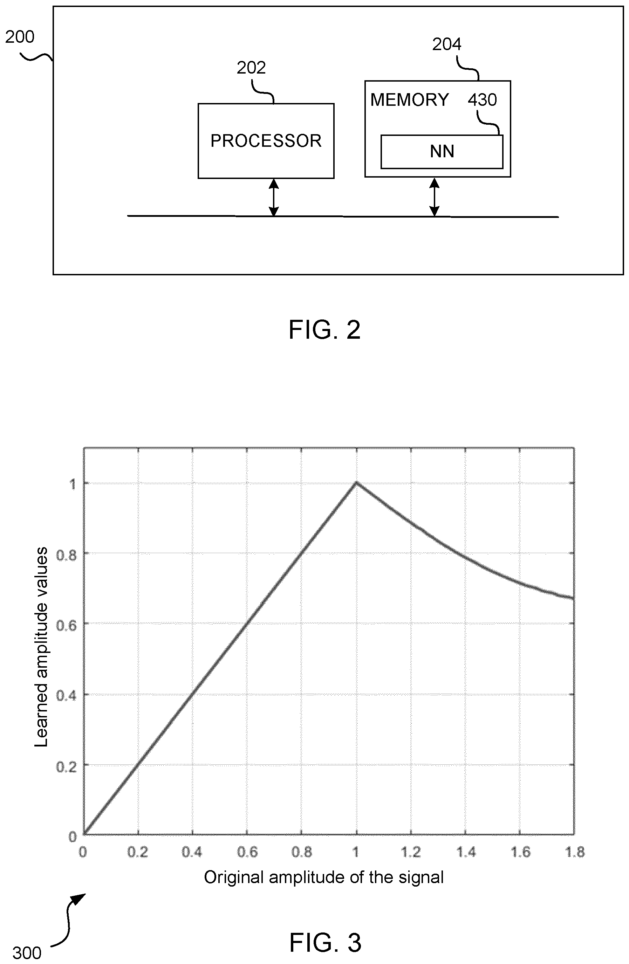

User device 130 may include, e.g., a mobile phone, a smartphone, a tablet computer, a smart watch, or any hand-held, portable and/or wearable device. User device 130 may also be referred to as a user equipment (UE). Network node 120 may comprise, e.g., a base station. The base station may include, e.g., any device suitable for providing an air interface for user devices to connect to a wireless network via wireless transmissions. Furthermore, network node 120 may comprise radio transceiver device 210. Furthermore, network node device 120 or radio transceiver device 210 may comprise apparatus 200 of Fig. 2.

In the following, various concepts and terms that may be relevant to at least some example embodiments will be discussed.

In orthogonal frequency division multiplexing (OFDM) waveform processing, data symbol generation may be realized, e.g., by converting bits to M-ary quadrature amplitude modulation (M-QAM) or M-ary phase shift keying (M-PSK) symbols. Then an inverse fast Fourier transform (IFFT) may be taken to generate a time domain OFDM signal, which may be denoted for an nth sample of a time-domain OFDM waveform, e.g., as:

$$x[n] = \frac{1}{\sqrt{N}} \sum_{k=-N_{act}/2}^{N_{act}/2-1} X[k] \, e^{\frac{j2\pi kn}{N}},$$

where k denotes an active subcarrier index with $k \in \{ -N_{act}/2, -N_{act}/2 + 1, ..., N_{act}/2 - 1\}$, and $X[k]$ is a kth data symbol in frequency domain. Moreover, N denotes a total number of samples, $N_{act}$ denotes a total number of active subcarriers and $N/N_{act}$ denotes an oversampling factor, while $N - N_{act}$ frequency-domain bins are zero. Next, a final OFDM signal may obtained with cyclic prefix (CP) addition and parallel-to-serial conversion. This procedure may be expressed by using matrix notation, e.g., as:

$$x = \text{vec}(TW^{-1}X),$$

where X, $W^{-1}$, and T denote an $N \times S$ frequency-domain data symbol matrix with S OFDM symbols, an $N \times N$ inverse discrete Fourier transform (IDFT) matrix, and an $(N + N_{CP}) \times N$ CP insertion matrix, respectively. Moreover, $\text{vec}(\cdot)$ denotes a vectorization operation.

For PAPR reduction, a PAPR of the OFDM waveform may be computed. An iteration index may be denoted as $l \in \{1,2,L\}$. Accordingly, sample-wise PAPR of a generated $x^{(l)} = [x_0^{(l)}, x_1^{(l)}, ..., x_{S-1}^{(l)}]$ may be computed, e.g., as:

$$PAPR(x^{(l)}) = 10\log_{10} \frac{\max_{n=0,1,...,N\times S} \left\{ \left| x^{(l)}[n] \right|^2 \right\}}{\frac{1}{N \times S} \sum_{n=0}^{S(N-1)} \{|x^{(l)}[n]|^2\}},$$

where **max** $\{\cdot\}$ represents a maximum operator and $|x|$ denotes an absolute value of a complex number **x.**

Then, at least in some situations, hard limiter-based clipping may be applied to reduce the PAPR, which may be represented for a target PAPR level $\lambda_{\text{target}}$ ($\lambda_{\text{target,dB}}$ for dB scale), e.g., as:

$$\bar{x}^{(l)}[n] = \begin{cases} A^{(l-1)}e^{\angle x^{(l-1)}[n]}, & \text{if } \left| x^{(l-1)}[n] \right| > A^{(l-1)}, \\ x^{(l-1)}[n], & \text{otherwise,} \end{cases}$$

where $\angle x$ denotes a phase value of a complex number **x**, $\bar{x}^{(l)}[n]$ represents a clipped $x^{(l-1)}[n]$, and $A^{(l-1)}$ denotes an amplitude threshold which may be computed, e.g., as:

$$A^{(l-1)} = \sqrt{\lambda_{\text{target}} E(|x^{(l-1)}|^2)},$$

with E(-) denoting an expectation operator.

Since a clipping operation may distribute clipping noise over available subcarriers, a filtering operation may be applied in frequency domain in order to prevent undesired emissions.

After the clipping operation, the clipped time-domain signal may be transformed to frequency domain with a fast Fourier transform (FFT). The frequency-domain filtered clipping noise signal obtained at the lth iteration may be represented for a kth subcarrier, e.g., as:

$$X^{(l)}[k] = H[k]\overline{X}^{(l)}[k],$$

where $\overline{X}^{(l)}[k]$ denotes the kth data symbol that is obtained at an lth iteration from the clipped signal through FFT. A filter H[k] may be defined for the kth symbol, e.g., as:

$$H[k] = \begin{cases} 1, & k \in \kappa_{\text{active}} \\ 0, & k \in \kappa_{\text{null}} \end{cases}$$

where $\kappa_{\text{active}}$ and $\kappa_{\text{null}}$ represent subcarrier sets that contain active subcarriers and non-active ones, respectively. Then, a PAPR reduced CP-OFDM signal may be obtained after IFFT and CP addition as

$$x^{(l)} = \text{vec}(TW^{-1}X^{(l)}).$$

In the following, various example embodiments will be discussed. At least some of these example embodiments described herein may allow machine learning (ML) -based reduction of peak-to-average-power ratio (PAPR) of time-domain radio signals.

Furthermore, at least some of the example embodiments described herein may allow reducing the PAPR of time-domain radio signals of high-frequency communications in an efficient way to achieve improvements in energy efficiency.

Furthermore, at least some of the example embodiments described herein may allow minimizing computational complexity of the PAPR reduction with the ML-based techniques.

Furthermore, at least some of the example embodiments described herein may allow optimizing clipping of an obtained time-domain signal in an end-to-end fashion by utilizing machine learning and different metrics, which then prevents peak regrowth after noise filtering, and leads to effective PAPR reduction by applying only one iteration of the clipping of the obtained time-domain signal.

In other words, at least some of the example embodiments described herein may allow an end-to-end learned ML model for the signal clipping that shrinks the peaks by taking the peak regrowth into the account. This way, peaks that may be caused by frequency domain clipping noise filtering are prevented and complexity of the overall PAPR reduction is reduced by limiting iterations to only one. Furthermore, since the ML model for the signal clipping is learned in an end-to-end manner, it may provide an overall good performance in terms of at least some of the following metrics considered in the learning process: a bit-error rate (BER), an error vector magnitude (EVM), the PAPR and an adjacent channel leakage ratio (ACLR).

Learning the ML model for the signal clipping in an end-to-end manner allows the ML model to reduce the PAPR effectively by finding a right clipping response, and to find a balance between the PAPR and error performance. This way, efficient PAPR reduction may be realized without harming the error performance while still maximizing the energy efficiency.

The ML model may be designed in such a way that the clipper response learned by the neural network may be converted to a look-up table (LUT) or a polynomial, which may then be used in real-time instead of running the inference for a trained neural network. This basically means that the complexity of the disclosure is low, as no multiplications or additions are needed for realizing the clipping. In a cellular network, the clipping LUT may be provided to a mobile terminal by the network, for example. At least in some embodiments, this may ensure compatible signal clipping and receiver models. The clipping LUTs may be, e.g., from a standardized library or a proprietary library.

A loss function that may include, e.g., BER, EVM, and PAPR as loss terms, may be utilized to learn a near-optimal signal clipping ML model. The considered PAPR term in the loss function may enable the signal clipping ML model to learn how to do clipping, as this processing may be realized in time domain. Then, due to the utilization of the BER and EVM terms in the loss function, the ML model may find a right balance between moderate and aggressive clipping, as the former may lead to limited PAPR improvement while the latter may degrade the error performance. This way, an effective signal clipping ML model that provides significant PAPR improvement and error performance, is obtained.

Thus, at least some of the example embodiments described herein may allow a learned signal clipping ML model that provides, e.g., around 6.5 dB PAPR with around 6% EVM with only one iteration.

The computational complexity of the disclosed arrangement may include merely the complexity of OFDM processing and one extra inverse fast Fourier transform (IFFT) - fast Fourier transform (FFT) pair. If the look-up table option is used, realization of the clipping does not require any additional multiplications or additions. Hence, the complexity of the disclosed arrangement is low.

The ML model may easily be extended to different numerology cases and these cases may be considered jointly in the training. Moreover, the disclosure may be extended into a multiple-input multiple-output (MIMO) case, as there are no significant differences between single-input single-output (SISO) and MIMO architectures from the clipping point of view.

Excluding the clipping and frequency domain filtering, the disclosed arrangement does not require any modifications to a transceiver chain.

Fig. 2 is a block diagram of apparatus 200, in accordance with an example embodiment. For example, apparatus 200 may be comprised in radio transceiver device 210 which in turn may be comprised in network node 120.

Apparatus 200 comprises one or more processors 202 and one or more memories 204 that comprise computer program code. Apparatus 200 may also include other elements not shown in Fig. 2.

Although apparatus 200 is depicted to include only one processor 202, apparatus 200 may include more processors. In an embodiment, memory 204 is capable of storing instructions, such as an operating system and/or various applications. Furthermore, memory 204 may include a storage that may be used to store, e.g., at least some of the information and data used in the disclosed embodiments, such as ML model 430 described in more detail below.

Furthermore, processor 202 is capable of executing the stored instructions. In an embodiment, processor 202 may be embodied as a multi-core processor, a single core processor, or a combination of one or more multi-core processors and one or more single core processors. For example, processor 202 may be embodied as one or more of various processing devices, such as a coprocessor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, a neural network (NN) chip, an artificial intelligence (AI) accelerator, a tensor processing unit (TPU), a neural processing unit (NPU), or the like. In an embodiment, processor 202 may be configured to execute hard-coded functionality. In an embodiment, processor 202 is embodied as an executor of software instructions, wherein the instructions may specifically configure processor 202 to perform the algorithms and/or operations described herein when the instructions are executed.

Memory 204 may be embodied as one or more volatile memory devices, one or more non-volatile memory devices, and/or a combination of one or more volatile memory devices and non-volatile memory devices. For example, memory 204 may be embodied as semiconductor memories (such as mask ROM, PROM (programmable ROM), EPROM (erasable PROM), flash ROM, RAM (random access memory), etc.).

When executed by at least one processor 202, instructions stored in at least one memory 204 cause apparatus 200 at least to obtain a time-domain signal corresponding to an orthogonal frequency division multiplexing (OFDM) modulated radio transmission bit stream.

The instructions, when executed by at least one processor 202, further cause apparatus 200 at least to clip the obtained time-domain signal to maintain a peak-to-average-power ratio (PAPR) of the obtained time-domain signal at or below a target level.

The clipping of the obtained time-domain signal to maintain the PAPR at or below the target level comprises applying a clipping response at least to a part of the obtained time-domain signal.

The clipping response represents a relationship between original amplitude values of time-domain OFDM signals and corresponding clipped amplitude values.

The clipping response has been generated with ML model 430 configured to generate a clipping response that reduces time-domain signal peaks while simultaneously suppressing regrowth of the time-domain signal peaks.

For example, ML model 430 may comprise a convolutional neural network (CNN). At least in some embodiments, ML model 430 may comprise a one-dimensional (1D) CNN. At least in some embodiments, the one-dimensional CNN may have, e.g., an input layer, an output layer, a first one-dimensional CNN layer with sixteen nodes, and a second one-dimensional CNN layer with two nodes. However, it is be noted that different CNN configurations are possible. For example, the number of layers may be increased, or a two-dimensional (2D) CNN with suitable modifications may be used.

For example, the instructions, when executed by at least one processor 202, may further cause apparatus 200 to access a lookup table comprising original and corresponding clipped amplitude values representing the generated clipping response, to perform the clipping of the obtained time-domain signal.

Alternatively to the use of the lookup table, the instructions, when executed by at least one processor 202, may further cause apparatus 200 to access a polynomial fit modelling the generated clipping response, to perform the clipping of the obtained time-domain signal.

At least in some embodiments, the instructions, when executed by at least one processor 202, may further cause apparatus 200 to apply the generated clipping response only to original amplitude values of the obtained time-domain signal that exceed a minimum amplitude threshold corresponding to a minimum PAPR.

At least in some embodiments, the instructions, when executed by at least one processor 202, may further cause apparatus 200 to apply noise filtering to the clipped time-domain signal in frequency domain to filter noise caused by the clipping of the obtained time-domain signal.

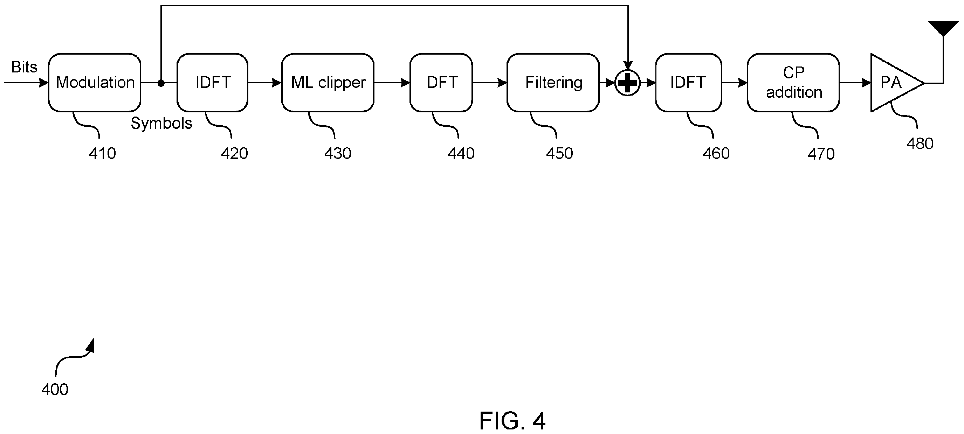

Diagram 300 of Fig. 3 illustrates an example of the clipping response (i.e., input-output relationship of ML model 430), and diagram 400 of Fig. 4 illustrates a disclosed example architecture for processing the radio transmission bit stream for transmission. For example, the example architecture of Fig. 4 may be employed in radio transceiver device 210. In practice, the clipping response may vary in accordance with parameters, such as resource allocation, carrier aggregation, etc.

In the example of diagram 400, symbols may be generated by OFDM modulating (block 410) bits to symbols, and then an inverse discrete Fourier transform (IDFT) (block 420) may be taken to obtain a time domain signal. Next, the learned signal clipping ML model 430 may be applied to reduce the PAPR of the signal, and clipping noise filtering (block 450) may be performed in frequency domain after discrete Fourier transform (DFT) (block 440). Then, a PAPR reduced CP-OFDM signal may be generated after IDFT (block 460) and cyclic prefix (CP) addition (block 470), and the signal may be forwarded to power amplifier 480 and then transmitted.

In the end-to-end training phase (described in more detail below), the learned signal clipping ML model 430 may be the only trainable part and a reference receiver may also be used in this model to generate loss terms related to the BER and EVM. The input-output relationship in Fig. 3 may be obtained with, e.g., a 1D CNN architecture.

In the inference phase, the signal clipping ML model 430 may be implemented with a look-up table (e.g., with the amplitude of a sample as the input and the clipped value as the output), rather than using a neural network. Alternatively, instead of a look-up table, a polynomial fit of the curve in Fig. 3 may be performed, and the polynomial may be used to model the input-output relationship.

This operation may be expressed mathematically as:

$$\bar{x}^{(l-1)} = f_{PAPR}(\left|x^{(l-1)}\right|, A^{l-1}),$$

where $f_{PAPR}(|\cdot|, \cdot)$ represents a polynomial fit of the curve in Fig. 3 with a threshold $A^{l-1}$.

At least in some embodiments, the shape of the curve in Fig. 3 may be such that the output and input is equal up to some threshold $A^{l-1}$ that corresponds to a minimum PAPR obtained in the training. Consequently, the learnt signal clipping ML model 430 may be applied only to samples that exceed a threshold, which may further lower complexity. In other words, no processing may be needed for samples that have amplitude values less than the threshold determined by ML model 430. Hence, the clipping operation is very efficient considering how rarely large peaks typically occur.

At least in some embodiments, the instructions, when executed by at least one processor 202, may further cause apparatus 200 to participate in end-to-end training of ML model 430 with receiver processing, via applying a loss function. For example, loss terms of the applied cross-entropy loss function may comprise the PAPR, a bit error rate (BER), an error vector magnitude (EVM), and/or an adjacent channel leakage ratio (ACLR).

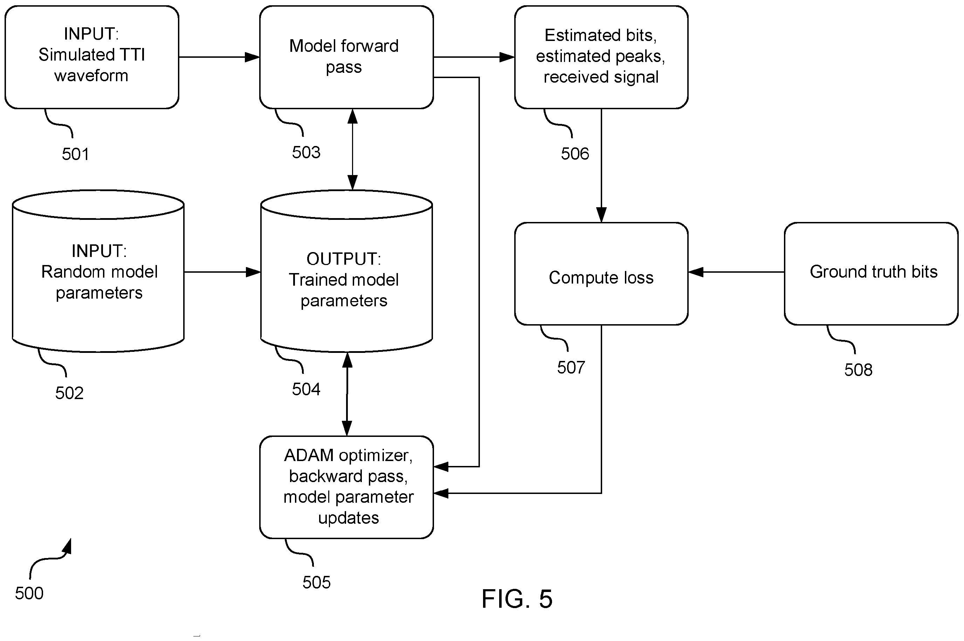

Diagram 500 of Fig. 5 illustrates the disclosed end-to-end training.

In the end-to-end learning, receiver processing may also be utilized. Accordingly, since there is no channel considered in the ML model 430 as the goal is to isolate the EVM degradation caused by PAPR reduction processing, generic receiver processing such as sampling, CP removal, and DFT operation may first be applied. Then, the signal may be transformed to the frequency domain through FFT, and EVM and BER calculations may be realized by utilizing the original frequency domain signal **X** and received signal **Y** that contains the clipping noise. These metrics may then be utilized within the loss function.

Referring to Fig. 5, random signals are generated at block 501 where a number of transmission time intervals (TTIs) may be considered. At the same time, the parameters of ML model 430 may be initialized by block 502 and the forward pass of the training process of ML model 430 may be realized by block 503. Then, block 506 may take necessary inputs of the forward pass iteration, which may include the estimated bits, the estimated signal peaks and the received signal, from block 503. In each iteration of the training, the end-to-end transmission may be realized, and necessary outputs, such as PAPR, EVM and BER values, may be obtained. Next, the loss level which may be based on these mentioned metrics, may be computed at block 507 by using these outputs and the actual transmitted bits provided by block 508. For example, three different loss terms may be considered. The first term may compute a binary cross-entropy between transmitted and received bits, which may be represented, e.g., as:

$$\mathcal{L}_{BCE}(\theta) = -\sum_i b[i] \log(\hat{b}[i]) + (1 - b[i]) \log(1 - \hat{b}[i]).$$

The second term may correspond to the PAPR level, e.g., with a slight modification to it. This term may be expressed, e.g., as:

$$\mathcal{L}_{PAPR}(\theta) = 10\log\frac{\max\limits_{n=0,1,\dots,N\times S}\left\{\left|x^{(l)}[n]\right|^2\right\}}{\frac{1}{N\times S}\sum_{n=0}^{S(N-1)}\{|x^{(l)}[n]|^2\}}.$$

As an optional embodiment, an EVM term may also be added to the loss function. It may be used to ensure that the ML model 430 learns the importance of meeting a subcarrier-wise EVM as much as possible. At least in some embodiments, some room for channel impairments may also be considered with an EVM limit. This EVM term may be denoted, e.g., as:

$$\mathcal{L}_{EVM}(\theta) = \log\left(\sum_k \frac{|Y[k] - X[k]|}{|X[k]|}\right).$$

In the end, the final loss term may be composed by considering all TTIs (batches), e.g., as:

$$\mathcal{L}(\theta) = \sum_{q=1}^{Q} \log_2(1 + snr_q)\mathcal{L}_{BCE,q}(\theta) + W_{PAPR}\log\left(\sum_{q=1}^{Q}\mathcal{L}_{PAPR,q}(\theta)\right)$$

$$+ W_{EVM}\log\left(\sum_{q=1}^{Q}\mathcal{L}_{EVM,q}(\theta)\right),$$

where batch index q may also be used to show how the composed loss term is computed. Accordingly, the example terms shown above may be computed for bits and signals of each batch, and then these may be separately summed over all batches. Moreover, **W$_{PAPR}$** and **W$_{EVM}$** denote the weights for the PAPR and EVM terms (at least the latter is an optional term) . The training may be realized by computation of the gradient of the loss term in the above equation in accordance with the trainable parameters θ, which may then be updated using, e.g., an ADAM optimizer at block 505 which is a variant of a stochastic gradient descent (SGD) method.

As result, the learned signal clipping ML model 430 response and the amplitudes **A$^l$** may be generated at the end of the training at block 504.

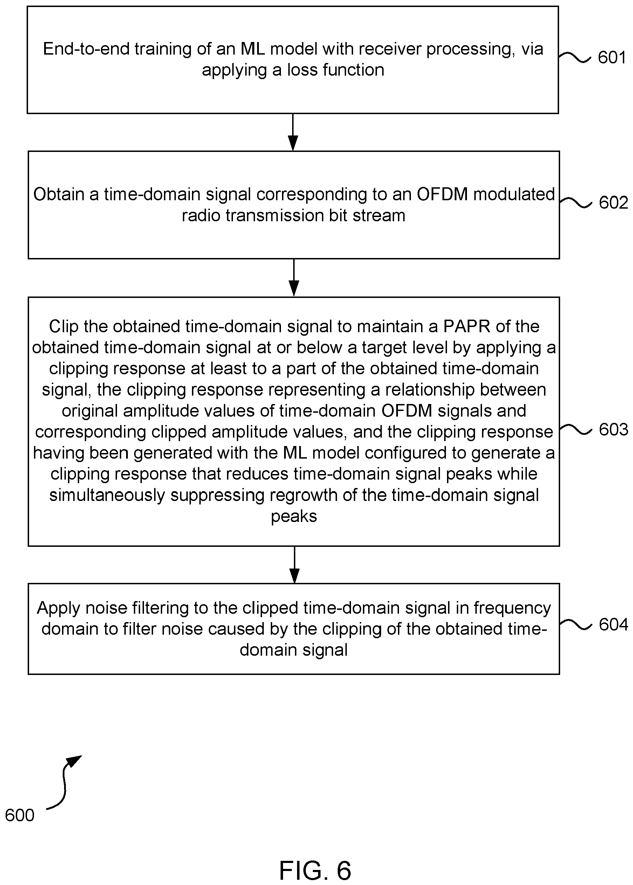

Fig. 6 illustrates an example flow chart of method 600 for apparatus 200, in accordance with an example embodiment.

At optional operation 601, apparatus 200 may participate in the end-to-end training of ML model 430 with the receiver processing, via applying the loss function.

At operation 602, apparatus 200 obtains the time-domain signal corresponding to the OFDM modulated radio transmission bit stream.

At operation 603, apparatus 200 clips the obtained time-domain signal to maintain the PAPR of the obtained time-domain signal at or below the target level. As discussed above in more detail, the clipping of the obtained time-domain signal to maintain the PAPR at or below the target level comprises applying the clipping response at least to a part of the obtained time-domain signal. The clipping response represents the relationship between the original amplitude values of the time-domain OFDM signals and the corresponding clipped amplitude values, and the clipping response has been generated with ML model 430 configured to generate the clipping response that reduces the time-domain signal peaks while simultaneously suppressing the regrowth of the time-domain signal peaks.

At optional operation 604, apparatus 200 may apply the clipping response only to the original amplitude values of the obtained time-domain signal that exceed the minimum amplitude threshold corresponding to the minimum PAPR.

Embodiments and examples with regard to Fig. 6 may be carried out by apparatus 200 of Fig. 2. Operations 601-604 may, for example, be carried out by at least one processor 202 and at least one memory 204. Further features of method 600 directly resulting from the functionalities and parameters of apparatus 200 are not repeated here. Method 600 can be carried out by computer programs or portions thereof.

Another example of an apparatus suitable for carrying out the embodiments and examples with regard to Fig. 6 comprises means for:

obtaining, at operation 602, the time-domain signal corresponding to the OFDM modulated radio transmission bit stream; and

clipping, at operation 603, the obtained time-domain signal to maintain the PAPR of the obtained time-domain signal at or below the target level, the clipping of the obtained time-domain signal to maintain the PAPR at or below the target level comprising applying the clipping response at least to a part of the obtained time-domain signal, the clipping response representing the relationship between the original amplitude values of the time-domain OFDM signals and the corresponding clipped amplitude values, and the clipping response having been generated with ML model 430 configured to generate the clipping response that reduces the time-domain signal peaks while simultaneously suppressing the regrowth of the time-domain signal peaks.

The functionality described herein can be performed, at least in part, by one or more computer program product components such as software components. According to an embodiment, apparatus 200 may comprise a processor or processor circuitry, such as for example a microcontroller, configured by the program code when executed to execute the embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), Tensor Processing Units (TPUs), and Graphics Processing Units (GPUs).

In the disclosed example embodiments, it may be possible to train one ML model / NN with a specific architecture, then derive another ML model / NN from that using processes such as compilation, pruning, quantization or distillation. The ML model / NN may be executed using any suitable apparatus, for example a CPU, GPU, ASIC, FPGA, compute-in-memory, analog, or digital, or optical apparatus. It is also possible to execute the ML model / NN in an apparatus that combines features from any number of these, for instance digital-optical or analog-digital hybrids. In some examples, weights and required computations in these systems may be programmed to correspond to the ML model / NN. In some examples, the apparatus may be designed and manufactured so as to perform the task defined by the ML model / NN so that the apparatus is configured to perform the task when it is manufactured without the apparatus being programmable as such.

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps of the methods described herein may be carried out in any suitable order, or simultaneously where appropriate. Additionally, individual blocks may be deleted from any of the methods without departing from the spirit and scope of the subject matter described herein. Aspects of any of the embodiments described above may be combined with aspects of any of the other embodiments described to form further embodiments without losing the effect sought.

The term 'comprising' is used herein to mean including the method, blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the spirit or scope of this specification.

**Claims**

1. An apparatus (200), comprising:

   at least one processor (202); and
   at least one memory (204) storing instructions that, when executed by the at least one processor (202), cause the apparatus (200) at least to:

   obtain a time-domain signal corresponding to an orthogonal frequency division multiplexing, OFDM, modulated radio transmission bit stream; and
   clip the obtained time-domain signal to maintain a peak-to-average-power ratio, PAPR, of the obtained time-domain signal at or below a target level,
   wherein the clipping of the obtained time-domain signal to maintain the PAPR at or below the target level comprises applying a clipping response at least to a part of the obtained time-domain signal, the clipping response representing a relationship between original amplitude values of time-domain OFDM signals and corresponding clipped amplitude values, and the clipping response having been generated with a machine learning, ML, model (430) configured to generate a clipping response that reduces time-domain signal peaks while simultaneously suppressing regrowth of the time-domain signal peaks.

2. The apparatus (200) according to claim 1, wherein the instructions, when executed by the at least one processor (202), further cause the apparatus (200) to apply noise filtering to the clipped time-domain signal in frequency domain to filter noise caused by the clipping of the obtained time-domain signal.

3. The apparatus (200) according to claim 1 or 2, wherein the instructions, when executed by the at least one processor (202), further cause the apparatus (200) to access a lookup table comprising original and corresponding clipped amplitude values representing the generated clipping response, to perform the clipping of the obtained time-domain signal.

4. The apparatus (200) according to claim 1 or 2, wherein the instructions, when executed by the at least one processor (202), further cause the apparatus (200) to access a polynomial fit modelling the generated clipping response, to perform the clipping of the obtained time-domain signal.

5. The apparatus (200) according to any of claims 1 to 4, wherein the instructions, when executed by the at least one processor (202), further cause the apparatus (200) to apply the generated clipping response only to original amplitude values of the obtained time-domain signal that exceed a minimum amplitude threshold corresponding to a minimum PAPR.

6. The apparatus (200) according to any of claims 1 to 5, wherein the ML model (430) comprises a convolutional neural network, CNN.

7. The apparatus (200) according to any of claims 1 to 6, wherein the instructions, when executed by the at least one processor (202), further cause the apparatus (200) to participate in end-to-end training of the ML model (430) with receiver processing, via applying a loss function.

8. The apparatus (200) according to claim 7, wherein loss terms of the applied cross-entropy loss function comprise at least one of: the PAPR, a bit error rate, BER, an error vector magnitude, EVM, or an adjacent channel leakage ratio, ACLR.

9. A method (600), comprising:

   obtaining (602), by an apparatus (200), a time-domain signal corresponding to an orthogonal frequency division multiplexing, OFDM, modulated radio transmission bit stream; and
   clipping (603), by the apparatus (200), the obtained time-domain signal to maintain a peak-to-average-power ratio, PAPR, of the obtained time-domain signal at or below a target level,
   wherein the clipping (603) of the obtained time-domain signal to maintain the PAPR at or below the target level comprises applying a clipping response at least to a part of the obtained time-domain signal, the clipping response representing a relationship between original amplitude values of time-domain OFDM signals and corresponding clipped amplitude values, and the clipping response having been generated with a machine learning, ML, model (430) configured to generate a clipping response that reduces time-domain signal peaks while simultaneously suppressing regrowth of the time-domain signal peaks.

10. An apparatus, comprising means for carrying out the method (600) according to claim 9.

11. A computer program comprising instructions for causing an apparatus to perform at least the following:

obtain a time-domain signal corresponding to an orthogonal frequency division multiplexing, OFDM, modulated radio transmission bit stream; and
clip the obtained time-domain signal to maintain a peak-to-average-power ratio, PAPR, of the obtained time-domain signal at or below a target level,
wherein the clipping of the obtained time-domain signal to maintain the PAPR at or below the target level comprises applying a clipping response at least to a part of the obtained time-domain signal, the clipping response representing a relationship between original amplitude values of time-domain OFDM signals and corresponding clipped amplitude values, and the clipping response having been generated with a machine learning, ML, model (430) configured to generate a clipping response that reduces time-domain signal peaks while simultaneously suppressing regrowth of the time-domain signal peaks.

12. A radio transceiver device (210), comprising the apparatus (200) according to any of claims 1 to 8.

13. A network node (120), comprising the radio transceiver device (210) according to claim 12.

FIG. 1

FIG. 2

FIG. 3

FIG. 4

FIG. 5

End-to-end training of an ML model with receiver processing, via applying a loss function ∿ 601

Obtain a time-domain signal corresponding to an OFDM modulated radio transmission bit stream ∿ 602

Clip the obtained time-domain signal to maintain a PAPR of the obtained time-domain signal at or below a target level by applying a clipping response at least to a part of the obtained time-domain signal, the clipping response representing a relationship between original amplitude values of time-domain OFDM signals and corresponding clipped amplitude values, and the clipping response having been generated with the ML model configured to generate a clipping response that reduces time-domain signal peaks while simultaneously suppressing regrowth of the time-domain signal peaks ∿ 603

Apply noise filtering to the clipped time-domain signal in frequency domain to filter noise caused by the clipping of the obtained time-domain signal ∿ 604

600

FIG. 6

EP 4 568 206 A1

Europäisches Patentamt
European Patent Office
Office européen des brevets

# EUROPEAN SEARCH REPORT

**Application Number**

EP 23 21 4660

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | OMAR MUHAMMAD SHAHMEER ET AL: "Mitigating Clipping Distortion in Multicarrier Transmissions Using Tensor-Train Deep Neural Networks", IEEE TRANSACTIONS ON WIRELESS COMMUNICATIONS, IEEE SERVICE CENTER, PISCATAWAY, NJ, US, vol. 22, no. 3, 30 September 2022 (2022-09-30), pages 2127-2138, XP011936070, ISSN: 1536-1276, DOI: 10.1109/TWC.2022.3209188 [retrieved on 2022-10-03] * Sections I., II., III. and IV. * | 1-13 | INV. H04L27/26 G06N3/08 |
| X | MATHIEU GOUTAY ET AL: "End-to-End Learning of OFDM Waveforms with PAPR and ACLR Constraints", ARXIV.ORG, CORNELL UNIVERSITY LIBRARY, 201 OLIN LIBRARY CORNELL UNIVERSITY ITHACA, NY 14853, 30 June 2021 (2021-06-30), XP081996582, * figures 1, 2 * * Sections II. and III. * | 1-13 | |
| X | TOMOYA KAGEYAMA ET AL: "Performance Analysis of OFDM with Peak Cancellation Under EVM and ACLR Restrictions", ARXIV.ORG, CORNELL UNIVERSITY LIBRARY, 201 OLIN LIBRARY CORNELL UNIVERSITY ITHACA, NY 14853, 15 September 2019 (2019-09-15), XP081477560, * Sections III. and IV. * * figures 2-4 * | 1-13 | |

**TECHNICAL FIELDS SEARCHED (IPC)**

H04L
G06N

The present search report has been drawn up for all claims

| Place of search | Date of completion of the search | Examiner |
|---|---|---|
| Berlin | 16 May 2024 | Chave, Julien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)